# EUROPÄISCHE PATENTSCHRIFT

(11) **EP 1 289 085 B1**
(45) Veröffentlichungstag und Bekanntmachung des Hinweises auf die Patenterteilung: **14.07.2010**
(21) Anmeldenummer: 01810851.4
(22) Anmeldetag: 03.09.2001
(51) Int. Cl.: H02B 1/056

(54) **Steckmodul für einen Niederspannungsverteiler**
Plug-in module for a medium voltage distributor
Module enfichable pour distributeur moyenne tension

(43) Veröffentlichungstag der Anmeldung: 05.03.2003
(73) Patentinhaber: ABB Schweiz AG, 5400 Baden (CH)
(72) Erfinder: Ehrensperger, Fritz, 8460 Marthalen (CH); Fuchs, Anita, 8240 Thayngen (CH)
(74) Vertreter: ABB Patent Attorneys

(56) Entgegenhaltungen:
- EP-A- 0 753 916
- US-A- 5 486 979

## Beschreibung

### TECHNISCHES GEBIET

Bei der Erfindung wird ausgegangen von einem Steckmodul nach dem Oberbegriff von Patentanspruch 1. Die Erfindung betrifft auch einen Niederspannungsverteiler nach dem Oberbegriff von Patentanspruch 11.

Ein derartiges Steckmodul ist in der EP-A2-0 753 916 beschrieben.

Das vorgenannte Steckmodul enthält zumindest ein Gehäuse, einen Kontaktträger und einen am Kontaktträger starr befestigten Steckkontakt. Beim Aufstecken des Moduls auf einen Sammelschienen enthaltenden Stecksockel eines Niederspannungsverteilers wird das Modul um eine Achse geschwenkt und in den Stecksockel eingerastet. Hierbei kontaktiert der Steckkontakt eine der Sammelschienen. Gegebenenfalls vorgesehene weitere Steckkontakte kontaktieren jeweils eine weitere der Sammelschienen. Das Steckmodul kann beliebige Funktionen ausführen und beispielsweise als Schaltgerät, Überspannungsableiter, Einspeiseblock oder Anschlussklemme ausgebildet sein. Ein mit einem derartigen Steckmodul versehener Niederspannungsverteiler kann flexibel geplant werden und zeichnet sich durch rasche Herstellbarkeit, einfache Einspeisung und freie Auswechselbarkeit des Steckmoduls aus.

### STAND DER TECHNIK

Ein Niederspannungsverteiler der vorgenannten Art mit einem Sammelschienen tragenden Stecksockel und mit mehreren Steckmodulen der vorgenannten Art ist in der ABB-Firmenschrift 20173/A "Wie erreicht man die höchste Verfügbarkeit in der Telekommunikation? smissline-S" (ABB Stotz Kontakt GmbH) beschrieben. Das beschriebene Steckmodul ist für Bemessungsströme bis 63 A ausgelegt.

### KURZE DARSTELLUNG DER ERFINDUNG

Der Erfindung, wie sie in den Patentansprüchen angegeben ist, liegt die Aufgabe zugrunde, ein Steckmodul und einen Niederspannungsverteiler der vorgenannten Art zu schaffen, welche Bemessungsströme von mehr als 63 A tragen können.

Beim Steckmodul nach der Erfindung sind der Kontaktträger und der daran befestigte Steckkontakt im wesentlichen senkrecht zur Schwenkachse verschiebbar im Gehäuse gelagert und mit einer in Richtung der Schwenkachse wirkenden Vorspannkraft beaufschlagt. Der Steckkontakt kann daher vor dem Aufstecken des Steckmoduls auf den Stecksockel des Niederspannungsverteilers näher an der Schwenkachse liegen als nach dem Aufstecken. Durch geeignete Bemessung des Abstandes des Steckkontaktes von der Schwenkachse vor dem Kontaktieren der Sammelschiene kann nun erreicht werden, dass beim Einschwenken des Steckmoduls in den Stecksockel das freie Ende des Steckkontakts selbst bei grossen Schwenkwinkeln unverkantet auf die Sammelschiene auftrifft und beim weiteren Schwenken leicht mit dieser kontaktiert werden kann. Es ist nun möglich, einen Steckkontakt mit grossen geometrischen Abmessungen, der demensprechend Bemessungsströme grösser 63 A führen kann, im erfindungsgemässen Steckmodul zu verwenden.

Ein grosser Wegausgleich beim Einschwenken des Steckkontaktes und zugleich eine vorteilhaft federnde Aufhängung des Steckkontaktes werden erzielt, wenn zur Erzeugung der Vorspannung eine Zugfeder vorgesehen ist, welche mit einem ersten ihrer beiden Enden am Kontaktträger und mit dem zweiten Ende am Gehäuse befestigt ist.

Ist im Inneren des Gehäuses ein die Verschiebung des Kontaktträgers begrenzender Anschlag angeordnet und weist der Kontaktträger eine den Steckkontakt tragende Platte auf, in die eine den Anschlag aufnehmende Materialausnehmung eingeformt ist, so kann der Wegausgleich besonders einfach gesteuert werden. Da der Steckkontakt zugleich federnd aufgehängt ist, kann ein derart ausgebildetes Steckmodul bei der Montage oder im Betrieb grossen Kräften ausgesetzt werden.

Ein ausreichend guter Wegausgleich wird erzielt mit einer Materialausnehmung, die zwei im wesentlichen senkrecht zur Verschiebungsrichtung des Kontaktträgers ausgerichtete und die Bewegung des Anschlags beim Schwenken begrenzende Flanken enthält. Vorzugsweise ist eine die Bewegung des Anschlags vor dem Aufstecken begrenzende erste der beiden Flanken von einem zinkenförmig ausgeführten Halteteil des Kontaktträgers gebildet. An diesem Halteteil kann dann ein erstes Ende der Zugfeder fixiert werden. Das zweite Ende der Zugfeder kann mit einfachen Mitteln an einem in das Gehäuse eingeformten, stiftförmig ausgeführten Halteelement befestigt werden.

Das Steckmodul zeichnet sich durch einfachen Aufbau aus, wenn das Gehäuse zweiteilig ausgeführt ist, und wenn in die Innerenseite mindestens eines der beiden Gehäuseteile Mittel eingeformt sind zum Führen des Kontaktteils und/oder eines mit dem Kontaktteil verbundenen Anschlussleiters beim Verschieben des Kontaktteils. Zugleich sind so mit geringem Aufwand eine einfache Montage und ein zuverlässiger Betrieb des Steckteils sichergestellt.

Das Steckmodul kann als elektrischer Apparat, etwa als Schalter, insbesondere Leitungsschutzschalter, als Überspannungsableiter, Anschlussklemme oder Einspeisung, oder aber als Adapter ausgeführt sein.

Das Steckmodul kann neben einem am verschiebbar gelagerten Kontaktträger befestigten Steckkontakt auch einen weiteren an einem weiteren Kontaktträger befestigten Steckkontakt oder aber auch mehrere weitere Steckkontakte aufweisen.

In einem mit einem derartigen Steckmodul bestückten Niederspannungsverteiler kontaktiert dann der schieblich gelagerte Steckkontakt diejenige Sammelschiene, die den geringsten Abstand von der Schwenkachse aufweist und bei der ein Wegausgleich beim Aufschwenken des Steckmoduls notwendig ist. Je nachdem, ob ein Wegausgleich notwendig ist oder nicht, kann beim weiteren Steckkontakt oder mehreren der weiteren Steckkontakte eine verschiebliche Lagerung des bzw. der weiteren Steckkontakte erforderlich sein oder kann der weitere Steckkontakt oder können die weiteren Steckkontakte unverschieblich gelagert sein.

### KURZE BESCHREIBUNG DER ZEICHNUNGEN

Ein bevorzugtes Ausführungsbeispiel der Erfindung wird nachfolgend anhand von Zeichnungen näher erläutert. Hierbei zeigt:
- Fig.1: eine Seitenansicht (in Richtung der Sammelschienen) einer Ausführungsform eines Niederspannungsverteilers mit einem als Adapter ausgeführten und einen Schalter tragenden Steckmodul nach der Erfindung,
- Fig.2: eine Aufsicht auf den Niederspannungsverteiler gemäss Fig. 1 nach dem Entfernen des Schalters,
- Fig.3: eine Aufsicht auf ein als Adapter ausgeführtes erfindungsgemässes Steckmodul des Niederspannnungsverteilers gemäss Fig.2 nach dem Entfernen des oberen Teils des zweiteilig ausgeführten Gehäuses des Steckmoduls,
- Fig.4: eine Aufsicht in Pfeilrichtung auf einen quer zu den Sammelschienen geführten Schnitt durch den Niederspannungsverteiler gemäss Fig.2, und
- Fig.5: eine Seitenansicht (in Richtung der Sammelschienen) des Niederspannungsverteilers gemäss Fig.2 beim Aufstecken des Steckmoduls gemäss Fig.3.

### WEGE ZUR AUSFÜHRUNG DER ERFINDUNG

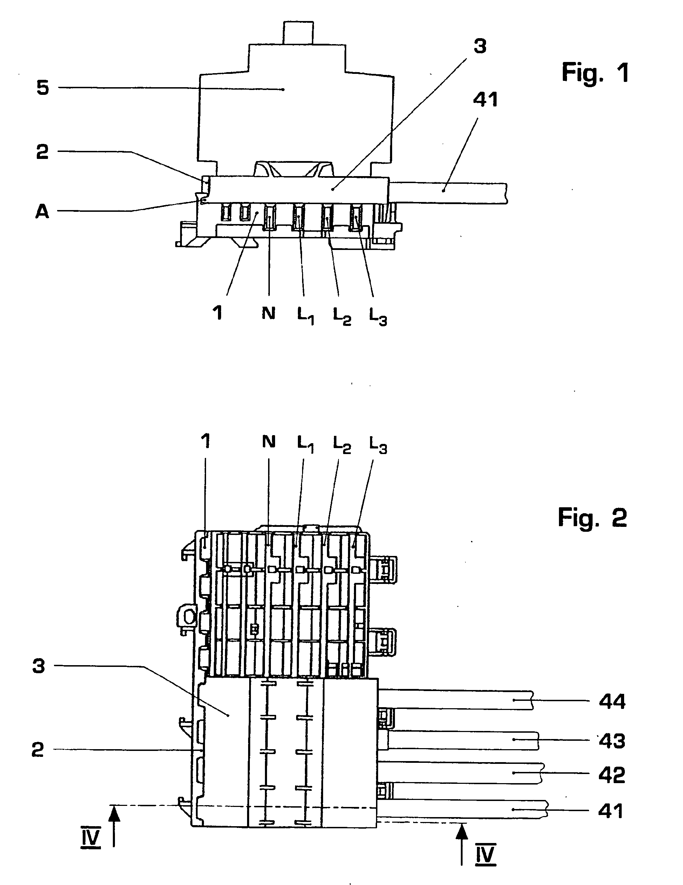

In allen Figuren bezeichnen gleiche Bezugszeichen auch gleichwirkende Teile. Der in Fig. 1 dargestellte Niederspannungsverteiler weist einen Stecksockel 1 auf, in dem sechs Sammelschienen angeordnet sind, von denen zwei nicht bezeichnete jeweils als Hilfssammelschiene ausgebildet sind. Eine dritte Sammelschiene N ist als Neutralleiter und die verbleibenden drei weiteren Sammelschienen L₁, L₂ und L₃ sind jeweils als einer von drei Phasenleitern ausgeführt. Auf den Stecksockel 1 ist ein als Adapter ausgeführtes Steckmodul 2 aufgesteckt, von dem in Fig.1 im wesentlichen nur ein Gehäuse 3 aus einem Isoliermaterial, etwa einem spritzgiessbaren oder strangpressbaren Kunststoff, und ein in das Gehäuse geführter und im allgemeinen als Litze ausgebildeter, flexibler Anschlussleiter 41 zu erkennen sind. Auf den Adapter ist ein als Schalter ausgeführter elektrischer Apparat 5 aufgesteckt. Statt als Schalter 5 kann der elektrische Apparat auch als Überspannungsableiter, als Einspeisungsblock oder als irgendein anderes elektrisches Gerät ausgebildet sein.

Das Steckmodul 2 wird durch Schwenken um eine Achse A auf den Stecksockel 1 aufgesteckt. Der Adapter stellt sicher, dass auch Apparate, die anderweitig befestigbar sind, über eine Schwenkbewegung auf den Stecksockel 1 aufgesteckt werden können. Der elektrischer Apparat 5 kann bei entsprechender Ausbildung direkt in das Steckmodul 2 integriert sein. Der Adapter ist dann überflüssig.

Aus Fig.2 ist ersichtlich, dass aus dem Steckmodul 2 neben dem Anschlussleiter 41 drei weitere Anschlussleiter 42, 43, und 44 geführt sind, welche jeweils mit einer der vier Sammelschienen N, L₁, L₂ und L₃ elektrisch leitend verbunden bzw. verbindbar sind.

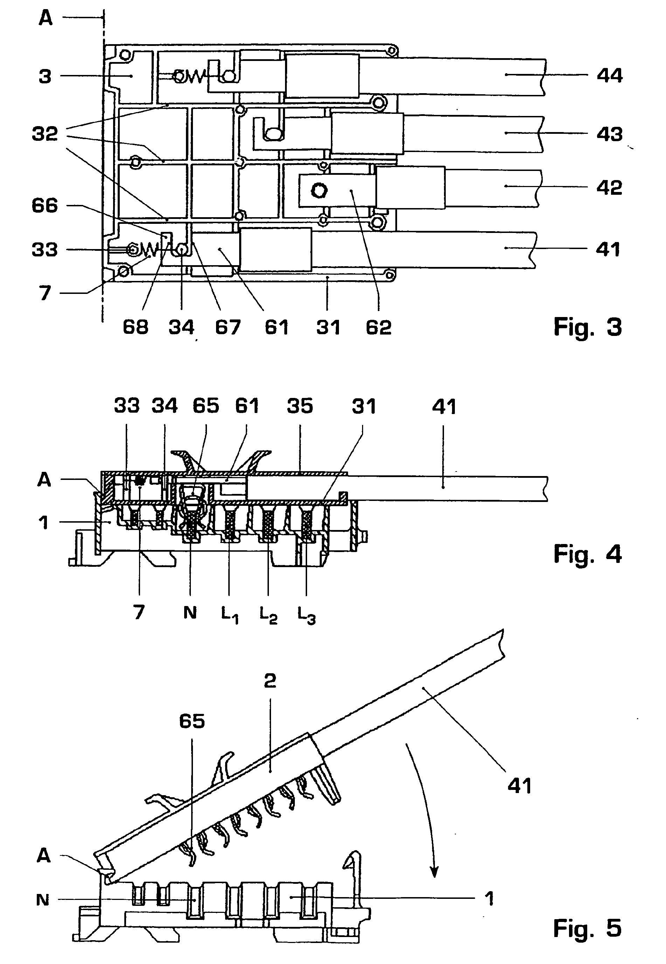

In Fig.3 ist ein als Gehäuseboden ausgeführtes Teil 31 des zweiteilig ausgeführten Gehäuses 3 dargestellt. Das Gehäuseteil 31 weist vier durch eingeformte Längsrippen 32 voneinander getrennte Abteile auf, in denen jeweils einer der vier Anschlussleiter 41, 42, 43, und 44 angeordnet ist. Ein aus Fig.3 nicht ersichtliches Ende jedes der vier Anschlussleiter ist mit einem als Platte ausgeführten Teil eines Kontaktträgers verbunden. Aus Gründen der Übersichtlichkeit sind nur der mit dem Anschlussleiter 41 verbundenene Kontaktträger 61 und der mit dem Anschlussleiter 42 verbundene Kontaktträger 62 mit einem Bezugszeichen gekennzeichnet. An jedem der Kontaktträger ist ein aus Fig.3 ebenfalls nicht ersichtlicher Steckkontakt elektrisch leitend befestigt.

Stellvertretend für alle Steckkontakte ist in Fig.4 der am Kontaktträger 61 etwa durch Schweissen oder Löten stoffschlüssig befestigte Steckkontakt 65 dargestellt. Dieser Steckkontakt ist zur Führung von 100 A betragenden Bemessungsströmen ausgebildet und weist dementsprechend grosse geometrische Abmessungen auf. Zudem weist er im dargestellten Schnitt Tulpenprofil auf. Die beiden Flanken des Profils sind durch einen nicht bezeichneten Federring versteift. Es werden so besonders hohe Kontaktkräfte erreicht. Im dargestellten Zustand des Niederspannungsverteilers mit aufgestecktem Steckmodul 2 kontaktiert der Steckkontakt 65 die Sammelschiene N. Es wird so über den Kontaktträger 61 und den Anschlussleiter 41 eine elektrisch leitende Verbindung zum elektrischen Apparat 5 hergestellt.

Auf Grund der grossen Abmessungen des Steckkontakts 65 kann diese Kontaktierung jedoch nicht allein durch Anlegen des Steckmoduls 2 an die Achse A und durch Schwenken des Steckmoduls erreicht werden, da der tangential am Schwenkkreis anliegende Steckkontakt 65 wegen seiner Nähe zur Schwenkachse A und wegen seiner grossen geometrischen Abmessungen unter einem grossen Winkel auf die ebenfalls tangential am Schwenkkreis anliegende Sammelschiene N auftrifft und dann beim weiteren Schwenken über einen grossen Winkelbereich geführt wird. Beim weiteren Schwenken würden am Steckmodul 2 und am Stecksockel 1 unerwünscht grosse Kräfte auftreten. Um dies zu verhindern, sind der Kontaktträger 61 und der daran befestigte Steckkontakt 65 im wesentlichen senkrecht zur Schwenkachse A verschiebbar im Gehäuse 3 gelagert und mit einer in Richtung der Schwenkachse wirkenden Vorspannkraft beaufschlagt.

Aus dem Figuren 3 und 4 ist ersichtlich, dass die Vorspannkraft durch eine als Schraubenfeder ausgebildete Zugfeder 7 erzielt wird. Diese Zugfeder 7 ist mit einem ihrer beiden Enden an einem stiftförmig ausgeführten Halteelement 33 befestigt, welches in das als Boden ausgeführte Gehäuseteil 31 eingeformt ist. Das andere Ende der Zugfeder 7 ist an einem zinkenförmig ausgebildeten Halteteil 66 des Kontaktträgers 61 befestigt.

Vorm Aufstecken auf den Stecksockel 1 werden der Kontaktträger 61 und der Steckkontakt 65 durch die Zugfeder 7 unter Bildung der Vorspannung nach links verschoben. Ein im Inneren des Gehäuses 3 angeordneter Anschlag 34 ist dann abgestützt auf einer im wesentlichen senkrecht zur Verschiebungsrichtung geführten Flanke 67. Diese Flanke begrenzt zusammen mit einer ebenfalls im wesentlichen senkrecht zur Verschiebungsrichtung geführten Flanken 68 eine in den plattenförmigen Abschnitt des Kontaktträgers 61 eingeformte und den Anschlag 34 umfassende Materialausnehmung (Figuren 3 und 4).

Das Steckmodul 2 wird beim Aufstecken auf den Stecksockel 1 zunächst mit einer Nase an einer die Drehachse A bildenden Lagerstelle des Stecksockels 1 angelegt und - wie - aus Fig.5 ersichtlich ist in Pfeilrichtung um die Achse A geschwenkt. Der Steckkontakt 65 trifft hierbei unter einem relativ grossen Winkel auf die Sammelschiene N auf. Der durch Abstützen des Anschlags 34 auf der Flanke 67 bestimmte Abstand zwischen der Achse A und dem Steckkontakt 65 ist so bemessen, dass der Steckkontakt 65 unverkantet auf die Sammelschiene N auftrifft. Beim weiteren Schwenken des Steckmoduls 2 wird der Steckkontakt 65 nun auf der Sammelschiene N zwangsgeführt. Da die Sammelschiene N tangential zum Schwenkkreis ausgerichtet ist, wird für eine möglichst kräftefreie Zwangsführung ein Wegausgleich des Steckkontaktes 65 benötigt. Dieser Wegausgleich wird durch ein Verschieben des Steckkontakts 65 und des Kontaktträgers 61 nach rechts, d.h. entgegen der Kraft der vorgespannten Zugfeder 7, erreicht. Hierbei wird zugleich auch der Anschlussleiter 41 nach rechts verschoben. Eine sichere Führung der verschobenen Teile wird durch Mittel erreicht, die in die Innerenseite des Gehäuses 3 eingeformt sind. Zu diesen Mitteln zählen die Längsrippen 32 und ein als Deckel ausgebildetes zweites Gehäuseteil 35, welches auf das Gehäuseteil 31 aufgesetzt ist. Bei aufgestecktem Steckmodul 2 sind der Kontaktträger 61 und damit auch der Steckkontakt 65 und der Anschlussleiter 41 durch den Anschlag 34 und die Flanke 68 vor dem Herausziehen aus dem Steckmodul 2 gesichert.

Ein Wegausgleich durch verschiebbare Lagerung der Kontaktträger und der daran befestigten Steckkontakte kann grundsätzlich bei allen vier Leitersystemen des Steckmoduls vorgesehen sein. Im allgemeinen ist der Wegausgleich jedoch nur bei einem Leitersystem notwendig, bei dem der Steckkontakt unter einem grossen Winkel auf die Sammelschiene auftrifft. Ist der Winkel relativ klein, wie dies etwa beim Leitersystem mit dem Anschlussleiter 42 der Fall ist (Fig.3), so kann auf den Wegausgleich verzichtet werden und können der Kontaktträger und der Steckkontakt konventionell, d.h. unverschieblich, gelagert werden.

### BEZUGSZEICHENLISTE

- 1: Stecksockel
- 2: Steckmodul
- 3: Gehäuse
- 5: elektrischer Apparat
- 7: Zugfeder
- 31, 35: Gehäuseteile
- 32: Längsrippen
- 33: Halteelement
- 34: Anschlag
- 41, 42, 43, 44: Anschlussleiter
- 61, 62: Kontaktträger
- 65: Steckkontakt
- 66: Halteteil
- 67, 68: Flanken
- A: Schwenkachse
- N, L₁, L₂ und L₃: Sammelschienen

## Patentansprüche

1. Steckmodul zum Aufstecken auf einen Sammelschienen (N, L₁, L₂ und L₃) enthaltenden Stecksockel (1) eines Niederspannungsverteilers mit einem beim Aufstecken am Stecksockel (1) um eine Achse (A) schwenkbaren Gehäuse (3), mindestens einem ersten Kontaktträger (61) und einem am ersten Kontaktträger (61) starr befestigten und mit einer (N) der Sammelschienen (N, L₁, L₂ und L₃) kontaktierbaren ersten Steckkontakt (65), **dadurch gekennzeichnet, dass** der erste Kontaktträger (61) und der daran befestigte erste Steckkontakt (65) im wesentlichen senkrecht zur Schwenkachse (A) verschiebbar im Gehäuse (3) gelagert und mit einer in Richtung der Schwenkachse (A) wirkenden Vorspannkraft beaufschlagt sind.

2. Steckmodul nach Anspruch 1, **dadurch gekennzeichnet, dass** zur Erzeugung der Vorspannung eine Zugfeder (7) vorgesehen ist, welche mit einem ersten ihrer beiden Enden am ersten Kontaktträger (61) und mit dem zweiten Ende am Gehäuse (3) befestigt ist.

3. Steckmodul nach einem der Ansprüche 1 oder 2, **dadurch gekennzeichnet, dass** im Inneren des Gehäuses (3) ein die Verschiebung des ersten Kontaktträgers (61) begrenzender Anschlag (34) angeordnet ist, und dass der erste Kontaktträger (61) eine den ersten Steckkontakt (65) tragende Platte aufweist, in die eine den Anschlag (34) aufnehmende Materialausnehmung eingeformt ist.

4. Steckmodul nach Anspruch 3, **dadurch gekennzeichnet, dass** die Materialausnehmung zwei im wesentlichen senkrecht zur Verschiebungsrichtung des ersten Kontaktträgers (61) ausgerichtete und die Bewegung des Anschlags (34) beim Schwenken begrenzende Flanken (67, 68) enthält.

5. Steckmodul nach Anspruch 4, **dadurch gekennzeichnet, dass** eine die Bewegung des Anschlags (34) vor dem Aufstecken begrenzende erste (67) der beiden Flanken gebildet ist von einem zinkenförmig ausgeführten und dem Fixieren des ersten Endes der Zugfeder (7) dienenden Halteteil (66) des ersten Kontaktträger (61).

6. Steckmodul nach Anspruch 5, **dadurch gekennzeichnet, dass** in das Gehäuse (3) ein stiftförmig ausgeführtes Halteelement (33) zum Befestigen des zweiten Endes der Zugfeder (7) eingeformt ist.

7. Steckmodul nach einem der Ansprüche 1 bis 6, **dadurch gekennzeichnet, dass** das Gehäuse (3) zweiteilig ausgeführt ist, und dass in die Innerenseite mindestens eines (31) der beiden Gehäuseteile (31, 35) Mittel eingeformt sind zum Führen des ersten Kontaktteils (61) und/oder eines mit dem ersten Kontaktteil (61) verbundenen Anschlussleiters (41) beim Verschieben des ersten Kontaktteils (61).

8. Steckmodul nach Anspruch 7, **dadurch gekennzeichnet, dass** das Gehäuse Teil eines elektrischen Apparates ist.

9. Steckmodul nach Anspruch 7, **dadurch gekennzeichnet, dass** das Gehäuse (3) Teil eines Adapters ist.

10. Steckmodul nach einem der Ansprüche 1 bis 9, **dadurch gekennzeichnet, dass** neben dem am verschiebbar gelagerten ersten Kontaktträger (61) befestigten ersten Steckkontakt (65) ein an einem zweiten Kontaktträger (62) befestigter zweiter Steckkontakt vorgesehen ist.

11. Niederspannungsverteiler mit einem Sammelschienen (N, L₁, L₂ und L₃) enthaltenden Stecksockel (1) und mit mindestens einem durch Schwenken um eine Achse (A) auf den Sockel (1) aufgesteckten und mindestens zwei der Sammelschienen jeweils mit einem von zwei Steckkontakten kontaktierenden Steckmodul (2), bei dem die Sammelschienen zueinander und zur Schwenkachse parallel angeordnet sind und unterschiedlichen Abstand zur Schwenkachse aufweisen, **dadurch gekennzeichnet, dass** das Steckmodul (2) gemäss Anspruch 10 ausgebildet ist und mit dem ersten Steckkontakt (65) diejenige Sammelschiene (N) kontaktiert, die den geringsten Abstand von der Schwenkachse (A) aufweist.

## Claims

1. Plug-in module for plugging onto a plug cap (1), which contains busbars (N, L₁, L₂ and L₃), of a low-voltage distribution board having a housing (3) which can be pivoted about an axis (A) for plugging onto the plug cap (1), having at least one first contact mount (61) and a first plug contact (65), which is rigidly attached to the first contact mount (61) and can make contact with one (N) of the busbars (N, L₁, L₂ and L₃), **characterized in that** the first contact mount (61) and the first plug contact (65) which is attached to it are mounted such that they can move essentially at right angles to the pivoting axis (A) in the housing (3), and a prestressing force, which acts in the direction of the pivoting axis (A), is applied to them.

2. Plug-in module according to Claim 1, **characterized in that** a tension spring (7) is provided in order to produce the prestress, is attached by a first of its two ends to the first contact mount (61), and is attached by the second end to the housing (3).

3. Plug-in module according to one of Claims 1 or 2, **characterized in that** a stop (34) which limits the movement of the first contact mount (61) is arranged in the interior of the housing (3), and **in that** the first contact mount (61) has a board which is fitted with the first plug contact (65) and in which a material recess is formed which holds the stop (34).

4. Plug-in module according to Claim 3, **characterized in that** the material recess contains two flanks (67, 68) which are aligned essentially at right angles to the movement direction of the first contact mount (61) and limit the movement of the stop (34) during pivoting.

5. Plug-in module according to Claim 4, **characterized in that** a first (67) of the two flanks which limits the movement of the stop (34) before plugging on is formed by a holding part (66) of the first contact mount (61), which holding part (66) is in the form of a tine and is used to fix the first end of the tension spring (7).

6. Plug-in module according to Claim 5, **characterized in that** a holding element (33), which is in the form of a pin, is formed in the housing (3) for attachment of the second end of the tension spring (7).

7. Plug-in module according to one of Claims 1 to 6, **characterized in that** the housing (3) is formed from two parts, and **in that** means are formed in the inner side of at least one (31) of the two housing parts (31, 35) in order to guide the first contact part (61) and/or a connecting conductor (41), which is connected to the first contact part (61), during movement of the first contact part (61).

8. Plug-in module according to Claim 7, **characterized in that** the housing is part of an electrical apparatus.

9. Plug-in module according to Claim 7, **characterized in that** the housing (3) is part of an adapter.

10. Plug-in module according to one of Claims 1 to 9, **characterized in that** a second plug contact, which is attached to a second contact mount (62), is provided in addition to the first plug contact (65), which is attached to the first contact mount (61), which is mounted such that it can move.

11. Low-voltage distribution board having a plug cap (1) which contains busbars (N, L₁, L₂ and L₃) and having at least one plug-in module (2), which is plugged onto the cap (1) by pivoting about an axis (A) and makes contact between at least two of the busbars and in each case one of the two plug contacts, in which plug-in module (2) the busbars are arranged parallel to one another and parallel to the pivoting axis and are at a different distance from the pivoting axis, **characterized in that** the plug-in module (2) is designed according to Claim 10, and, by means of the first plug contact (65), makes contact with that busbar (N) which is closest to the pivoting axis (A).

## Revendications

1. Module enfichable pour l'enfichage sur un socle d'enfichage (1) contenant des barres omnibus (N, L₁, L₂ et L₃), d'un distributeur basse tension, comprenant un boîtier (3) pouvant pivoter autour d'un axe (A) lors de l'enfichage sur le socle d'enfichage (1), au moins un premier support de contacts (61) et un premier contact enfichable (65) fixé de manière rigide sur le premier support de contacts (61) et pouvant être mis en contact avec l'une (N) des barres omnibus (N, L₁, L₂ et L₃), **caractérisé en ce que** le premier support de contacts (61) et le premier contact enfichable (65) fixé sur lui sont montés de manière déplaçable essentiellement perpendiculairement à l'axe de pivotement (A) dans le boîtier (3) et sont sollicités avec une force de précontrainte agissant dans la direction de l'axe de pivotement (A).

2. Module enfichable selon la revendication 1, **caractérisé en ce que** pour produire la précontrainte, on prévoit un ressort de traction (7), qui est fixé avec une première de ses deux extrémités sur le premier support de contacts (61) et avec la deuxième extrémité sur le boîtier (3).

3. Module enfichable selon l'une quelconque des revendications 1 ou 2, **caractérisé en ce qu'**à l'intérieur du boîtier (3) est disposée une butée (34) limitant le déplacement du premier support de contacts (61), et **en ce que** le premier support de contacts (61) présente une plaque portant le premier contact enfichable (65), dans laquelle est formé un évidement de matière recevant la butée (34).

4. Module enfichable selon la revendication 3, **caractérisé en ce que** l'évidement de matière contient deux flancs (67, 68) orientés essentiellement perpendiculairement à la direction de déplacement du premier support de contacts (61) et limitant le déplacement de la butée (34) lors du pivotement.

5. Module enfichable selon la revendication 4, **caractérisé en ce qu'**un premier (67) des deux flancs limitant le déplacement de la butée (34) avant l'enfichage est formé par une pièce de retenue (66) du premier support de contacts (61) réalisée en forme de doigt et servant à la fixation de la première extrémité du ressort de traction (7).

6. Module enfichable selon la revendication 5, **caractérisé en ce qu'**un élément de retenue (33) réalisé en forme de goupille est formé dans le boîtier (3) pour fixer la deuxième extrémité du ressort de traction (7).

7. Module enfichable selon l'une quelconque des revendications 1 à 6, **caractérisé en ce que** le boîtier (3) est réalisé en deux parties, et **en ce que** dans le côté intérieur d'au moins l'une (31) des deux parties de boîtier (31, 35), sont formés des moyens pour guider la première partie de contact (61) et/ou un conducteur de raccordement (41) connecté à la première partie de contact (61) pour déplacer la première partie de contact (61).

8. Module enfichable selon la revendication 7, **caractérisé en ce que** le boîtier fait partie d'un appareil électrique.

9. Module enfichable selon la revendication 7, **caractérisé en ce que** le boîtier (3) fait partie d'un adaptateur.

10. Module enfichable selon l'une quelconque des revendications 1 à 9, **caractérisé en ce que** l'on prévoit en plus du premier contact enfichable (65) fixé sur le premier support de contacts (61) monté de manière déplaçable, un deuxième contact enfichable fixé sur un deuxième support de contacts (62).

11. Distributeur basse tension comprenant un socle d'enfichage (1) contenant des barres omnibus (N, L₁, L₂ et L₃) et au moins un module enfichable (2) enfiché par pivotement autour d'un axe (A) sur le socle (1) et mettant en contact au moins deux des barres omnibus à chaque fois avec l'un de deux contacts enfichables, les barres omnibus étant disposées parallèlement les unes aux autres et à l'axe de pivotement et présentant des distances à l'axe de pivotement différentes, **caractérisé en ce que** le module enfichable (2) est réalisé selon la revendication 10 et met en contact le premier contact enfichable (65) avec la barre omnibus (N) qui présente la distance à l'axe de pivotement (A) la plus faible.
